# EUROPEAN PATENT SPECIFICATION

(11) **EP 3 203 127 B1**
(45) Date of publication and mention of the grant of the patent: **04.09.2019**
(21) Application number: 17153458.9
(22) Date of filing: 27.01.2017
(51) Int. Cl.: F16K 31/06, F16K 1/34, F16K 39/02, F16K 31/40, F16K 31/383

(54) **NEEDLE VALVE**
NADELVENTIL
OBTURATEUR À POINTEAU

(30) Priority: 28.01.2016 IT UB20160518
(43) Date of publication of application: 09.08.2017
(73) Proprietor: Bosch Rexroth Oil Control S.p.A., 20149 Milano (IT)
(72) Inventor: BARTOLACELLI, Marco, 41042 Fiorano Modenese, MODENA (IT)
(74) Representative: Casadei, Giovanni

(56) References cited:
- EP-A1- 2 902 682
- DE-A1- 19 700 979
- US-A- 4 540 154
- US-A1- 2002 113 219
- US-A1- 2014 166 915

## Description

The present invention relates to a needle valve provided with a centering bushing. The invention also relates to a centering bushing for the valve.

The invention relates in particular to a needle valve, provided with a sealing seat, concentric to a longitudinal axis. A slim and elongate shutter, also known as a "pin", is movable along a sliding direction between at least an open position, in which it is distant from the sealing seat and enables passage of fluid through the sealing seat, and a closed position, in which it is in contact with the sealing seat and prevents passage of fluid.

At least a portion of the pin is slidably arranged in a housing channel, typically fashioned in a part of the valve, which carries out a guide function for the sliding of the pin.

In presently available valves, the pin is guided in the travel thereof only by the housing channel. Typically, said housing channel is fashioned through a part of the valve and is substantially located at an end of the valve, and houses an end portion of the pin. The pin is thus not guided with precision along the sliding direction thereof, and it frequently occurs that it misaligns with respect to the sealing seat, realising an imperfect closure which produces undesired leakage. Further, the misalignment between the pin and the sealing seat has the consequence that the pin impacts the sealing seat not along a concentric direction but with a slight offset. This determines a rapid deterioration of the sealing seat which, consequently, does not ensure a correct seal. An example of a valve wherein the pin is guided on two distinct portions thereof is disclosed in document DE19700979. This pin valve is not provided with a shutter interacting with the pin. A valve according to the preamble of claim 1 is known from EP 2902682 A1.

The aim of the present invention is to provide a needle valve which allows to obviate the drawbacks of the currently available valves.

An advantage of the valve of the invention is to significantly reduce the maximum leakage allowed for the valve in the closed condition.

A further advantage of the valve of the invention is to resist phenomena of wear for much longer than with the presently available valves.

The invention is a needle valve according to claim 1. Further characteristics and advantages of the present invention will become more apparent from the following detailed description of an embodiment of the present invention, illustrated by way of non-limiting example in the attached figures, in which:
- figure 1 is a section view of a needle valve according to the present invention, in a first operating configuration;

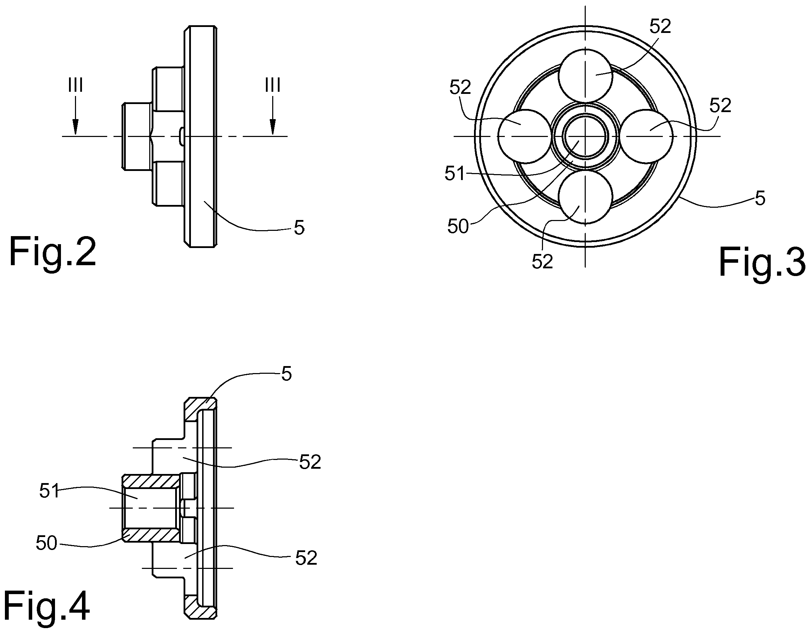

- figure 2 is a first view of a centering bushing according to the present invention;
- figure 3 is a view from the left of the centering bushing of figure 2;
- figure 4 is a section view of the bushing of figure 2 along plane III-III.

The needle valve according to the present invention comprises a sealing seat (2), concentric to a longitudinal axis (Y). A pin (3) is movable along a sliding direction (X) between at least an open position, in which it is distant from the sealing seat (2), and a closed position, in which it is in contact with the sealing seat (2) and causes closing thereof with respect to the fluid passage.

As is usual in the sector, the pin (3) has a sealing end having a conical conformation, destined to come into contact with the sealing seat (2). In turn the sealing seat (2) has a conical conformation. In the closed position of the end of the pin (3), the pin (3) partly inserts in the sealing seat (2), coming into contact therewith and thus realising the closure which prevents passage of fluid through the sealing seat (2).

The sliding of the pin can be produced in various ways, for example, by an electromechanical actuator or by a piloting line, or in another way. In the illustrated embodiment, the valve is provided with an electromagnetic actuator (E) which, as it is known by a person skilled in the art, commands the sliding of the pin (3).

The valve further comprises a housing channel (4) within which at least a first portion (31) of the pin (3) is slidably arranged. The valve further comprises a centering bushing (5) provided with a through opening (51) structured to slidably receive a second portion (32) of the pin (3). The through opening (51) can be afforded through a bush (50) that is solidly constrained to the bushing (5).

As already mentioned, in presently available valves, the pin (3) is guided in the travel thereof only by the housing channel. Typically, said housing channel is afforded through a part of the valve and is substantially located at an end of the valve, and houses an end portion of the pin. The pin is thus not guided with precision along the sliding direction thereof, and it frequently occurs that it misaligns with respect to the sealing seat, realising an imperfect closure which produces undesired leakage. Further, the misalignment between the pin and the sealing seat has the consequence that the pin impacts the sealing seat not along a concentric direction but with a slight offset, which leads to a rapid deterioration of the sealing seat.

In the valve of the invention, the pin (3) is guided in sliding, not only by the housing (4) but also by the centering bushing (5). This allows to maintain the sliding direction (X) of the pin (3) well-aligned to the longitudinal axis (Y) of the sealing seat (2). In this way, a correct alignment of the pin (3) is always ensured with the sealing seat (2), so that the closure is always correct, and wear on the sealing seat (2) is considerably reduced.

For this purpose, the through opening (51) can be so structured as to accommodate the second portion (32) of the pin (3) with precise coupling, i.e. with a very small clearance. The through opening (51) is concentric to the longitudinal axis (Y) of the sealing seat (2), so that the sliding direction (X) of the pin (3) is maintained aligned to the longitudinal axis (Y) of the sealing seat (2).

In the illustrated embodiment the centering bushing (5) is located between the first portion (31) of the pin (3) and the sealing seat (2). This location allows to obtain a particularly effective guide of the pin and does not require substantial modifications to the architecture of the valve.

The centering bushing can be provided with one or more further through openings (52) which allow passage of the fluid. If it is provided with one or more further through openings (52), the bushing (5) does not produce any substantial fluid-dynamic influence on the operation of the valve.

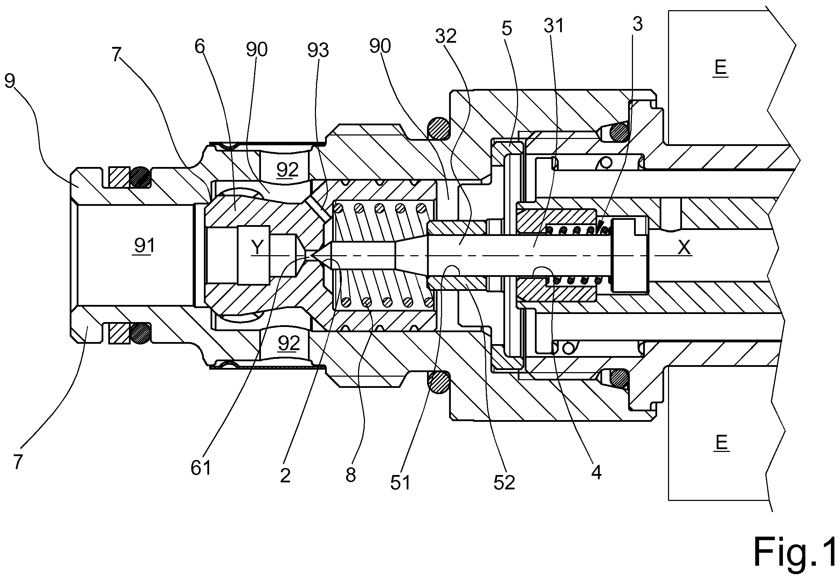

Purely by way of example, figure 1 illustrates a needle valve which uses the centering bushing (5) according to the present invention. The valve comprises a main sealing seat (7), interposed between a first opening (91) and a second opening (92) for passage of a fluid.

A shutter (6) is mobile along the sliding direction (X) between a closed position, in which it is in contact with the main sealing seat (7) and prevents passage of fluid through the main seat (7), and an open position, in which it is distant from the main sealing seat (7) and enables passage of fluid through the main seat (7). The sealing seat (2) can be fashioned on a frontal surface of the shutter (6), at an end of a through-hole (61) fashioned through the shutter (6).

The centering bushing (5) is so arranged as to define an abutment for the shutter (6) when the shutter (6) is in the open position thereof. The abutment provided by the centering bushing (5) prevents the shutter (6), when displacing into the open position thereof, from impacting against the sealing end of the pin (3).

The valve comprises a containment body (9) which defines a chamber (90) into which the first and the second openings (91, 92) open. The shutter (6) and the bushing (5) are housed internally of the chamber (90). The shutter (6) is interposed between the main seat (7) and the bushing (5).

The centering bushing (5) can further advantageously be used as a resting and/or centering element for elastic means acting on the shutter (6). In the illustrated embodiment, the valve comprises elastic means (8), for example a helical spring, which elastic means (8) are arranged in contact with the shutter (6) and the centering bushing (5) for exerting a thrust on the shutter (6). In substance, a helical spring (8) can be arranged concentrically of the bush (50), partially compressed between the shutter (6) and a surface of the bushing (5).

The operation of the valve illustrated in figure 1 is substantially as follows.

When the pin (3) is in the closed position, in abutment on the sealing seat (2), the shutter (6) is maintained in the closed position thereof, by the difference of pressure between the second opening (92) and the first opening (91). The valve is in fact predisposed for being connected to a source of pressurized fluid (for example a piston) at the second opening (92), and for being connected to a reservoir or discharge at the first opening.

By displacing the pin (3) into the open position, the pressurized fluid transits through the through-hole (61) and a communication is opened between the first and the second openings (91, 92) via the auxiliary conduit (93) fashioned through a wall of the shutter (6). In these conditions, the shutter (6) moves into the open position by effect of the depression which is created on the side of the pin (3). By returning the pin (3) into the closed position the shutter (6) returns into the closed position by effect of the pressure at the second opening (92).

The valve illustrated in figure 1, as well as the operation described in the foregoing, are only an example of a valve in which the centering bushing (5) can be usefully employed. The centering bushing (5) can in fact be used in all valves provided with a pin (3), i.e. with an element having an element with an elongate shape destined to be arranged to seal a seat (2) at an end thereof.

## Claims

1. A needle valve comprising: a sealing seat (2), concentric to a longitudinal axis (Y); a pin (3), movable along a sliding direction (X) between at least an open position, in which it is distant from the sealing seat (2), and a closed position, in which it is in contact with the sealing seat (2); a housing channel (4) within which at least a first portion (31) of the pin (3) is slidably arranged; a containment body (9) which defines a chamber (90) into which a first and a second opening (91, 92) open;
a main sealing seat (7), interposed between said first opening (91) and said second opening (92); a shutter (6), movable along the sliding direction (X) between an open position, in which it is in contact with the main sealing seat (7), and a closed position, in which it is distant from the main sealing seat (7);
wherein the sealing seat (2) is fashioned on a frontal surface of the shutter (6), at an end of a through-hole (61) fashioned through the shutter (6);
**characterized in that** it moreover comprises a centering bushing (5) provided with a through opening (51), which is so structured as to slidably receive a second portion (32) of the pin (3); and **in that** the shutter (6) and the bushing (5) are housed internally of the chamber (90) and the shutter (6) is interposed between the main seat (7) and the bushing (5), the centering bushing (5) being so arranged as to define an abutment for the shutter (6) when the shutter (6) is in the open position thereof, wherein the abutment provided by the centering bushing (5) prevents the shutter (6), when displacing into the open position thereof, from impacting against the sealing end of the pin (3).

2. A valve according to claim 1, wherein the through opening (51) is so structured as to accommodate the second portion (32) of the pin (3) with precise coupling.

3. A valve according to claim 1, wherein the through opening (51) is concentric to the longitudinal axis (Y) of the sealing seat (2).

4. A valve according to claim 1, wherein the centering bushing (5) is located between the first portion (31) of the pin (3) and the sealing seat (2).

5. A valve according to claim 1, wherein the centering bushing comprises one or more further through openings (52) which allow passage of the fluid.

6. A valve according to claim 5, comprising elastic means (8) arranged in contact with the shutter (6) and the centering bushing (5) for exerting a thrust on the shutter (6).

## Patentansprüche

1. Nadelventil, umfassend:
einen Dichtsitz (2), konzentrisch zu einer Längsachse (Y);
einen Stift (3), der entlang einer Gleitrichtung (X) zwischen mindestens einer offenen Position, in der er vom Dichtsitz (2) entfernt ist, und einer geschlossenen Position, in der er mit dem Dichtsitz (2) in Kontakt steht, bewegbar ist;
einen Gehäusekanal (4), in dem mindestens ein erster Abschnitt (31) des Stifts (3) verschiebbar angeordnet ist;
einen Aufnahmekörper (9), der eine Kammer (90) definiert, in die eine erste und eine zweite Öffnung (91, 92) münden;
einen Hauptdichtsitz (7), der zwischen der ersten Öffnung (91) und der zweiten Öffnung (92) angeordnet ist;
einen Verschluss (6), der entlang der Gleitrichtung (X) zwischen einer offenen Position, in der er mit dem Hauptdichtsitz (7) in Kontakt steht, und einer geschlossenen Position, in der er von dem Hauptdichtsitz (7) entfernt ist, bewegbar ist;
wobei der Dichtsitz (2) an einer Stirnfläche des Verschlusses (6) an einem Ende eines Durchgangslochs (61) ausgebildet ist, das durch den Verschluss (6) ausgebildet ist;
**dadurch gekennzeichnet, dass** es zudem eine Zentrierbuchse (5), die mit einer Durchgangsöffnung (51) versehen ist, die so aufgebaut ist, dass sie einen zweiten Abschnitt (32) des Stifts (3) verschiebbar aufnimmt, umfasst und dass der Verschluss (6) und die Buchse (5) im Inneren der Kammer (90) untergebracht sind und der Verschluss (6) zwischen dem Hauptsitz (7) und der Buchse (5) angeordnet ist, wobei die Zentrierbuchse (5) so angeordnet ist, dass sie einen Anschlag für den Verschluss (6) definiert, wenn sich der Verschluss (6) in seiner offenen Position befindet, wobei der von der Zentrierbuchse (5) bereitgestellte Anschlag verhindert, dass der Verschluss (6) beim Verschieben in seine offene Position gegen das Dichtungsende des Stifts (3) stößt.

2. Ventil nach Anspruch 1, wobei die Durchgangsöffnung (51) so aufgebaut ist, dass sie den zweiten Abschnitt (32) des Stifts (3) mit präziser Kopplung aufnimmt.

3. Ventil nach Anspruch 1, wobei die Durchgangsöffnung (51) konzentrisch zur Längsachse (Y) des Dichtsitzes (2) ist.

4. Ventil nach Anspruch 1, wobei sich die Zentrierbuchse (5) zwischen dem ersten Abschnitt (31) des Stifts (3) und dem Dichtsitz (2) befindet.

5. Ventil nach Anspruch 1, wobei die Zentrierbuchse eine oder mehrere weitere Durchgangsöffnungen (52) umfasst, die den Durchtritt des Fluids ermöglichen.

6. Ventil nach Anspruch 5, umfassend elastische Mittel (8), die in Kontakt mit dem Verschluss (6) und der Zentrierbuchse (5) angeordnet sind, um einen Schub auf den Verschluss (6) auszuüben.

## Revendications

1. Robinet à pointeau comprenant :
un siège d'étanchéité (2) concentrique à un axe longitudinal (Y) ;
un pointeau (3) mobile le long d'une direction de coulissement (X) entre au moins une position d'ouverture, dans laquelle celui-ci est éloigné du siège d'étanchéité (2), et une position de fermeture, dans laquelle celui-ci se trouve en contact avec le siège d'étanchéité (2) ;
un canal de logement (4) à l'intérieur duquel au moins une première partie (31) du pointeau (3) est disposée de façon coulissante ;
un corps de contenance (9) qui définit une chambre (90) dans laquelle s'ouvrent une première et une seconde ouvertures (91, 92) ;
un siège d'étanchéité (7) principal, interposé entre ladite première ouverture (91) et ladite seconde ouverture (92) ;
un obturateur (6) mobile le long de la direction de coulissement (X) entre une position d'ouverture, dans laquelle celui-ci se trouve en contact avec le siège d'étanchéité (7) principal, et une position de fermeture, dans laquelle celui-ci est éloigné du siège d'étanchéité (7) principal ;
dans lequel le siège d'étanchéité (2) est façonné sur une surface frontale du obturateur (6), à une extrémité d'un trou débouchant (61) façonné à travers l'obturateur (6) ;
**caractérisé en ce qu'**il comprend de plus une bague de centrage (5) pourvue d'une ouverture débouchante (51) étant structurée de manière à recevoir de façon coulissante une seconde partie (32) du pointeau (3), et **en ce que** l'obturateur (6) et la bague (5) sont logés à l'intérieur de la chambre (90) et l'obturateur (6) est interposé entre le siège principal (7) et la bague (5), la bague de centrage (5) étant disposée de manière à définir une butée pour l'obturateur (6), lorsque l'obturateur (6) se trouve dans sa position d'ouverture, dans lequel la butée fournie par la bague de centrage (5) empêche l'obturateur (6), lorsqu'il se déplace dans sa position d'ouverture, de buter contre l'extrémité d'étanchéité du pointeau (3).

2. Robinet selon la revendication 1, dans lequel l'ouverture débouchante (51) est structurée de manière à loger la seconde partie (32) du pointeau (3) avec un couplage précis.

3. Robinet selon la revendication 1, dans lequel l'ouverture débouchante (51) est concentrique à l'axe longitudinal (Y) du siège d'étanchéité (2).

4. Robinet selon la revendication 1, dans lequel la bague de centrage (5) est située entre la première partie (31) du pointeau (3) et le siège d'étanchéité (2).

5. Robinet selon la revendication 1, dans lequel la bague de centrage comprend une ou plusieurs ouvertures débouchantes (52) supplémentaires permettant le passage du fluide.

6. Robinet selon la revendication 5, comprenant des moyens élastiques (8) disposés en contact avec l'obturateur (6) et la bague de centrage (5) pour exercer une poussée sur l'obturateur (6).
